# EUROPÄISCHE PATENTSCHRIFT

(11) **EP 0 882 624 B1**
(45) Veröffentlichungstag und Bekanntmachung des Hinweises auf die Patenterteilung: **12.09.2001**
(21) Anmeldenummer: 98108919.6
(22) Anmeldetag: 15.05.1998
(51) Int. Cl.: B60R 21/00

(54) **Verfahren zur bedarfsgerechten Steuerung von Insassen-Sicherheitseinrichtungen**
Method of controlling accordingly on request a safety device for vehicle occupants
Méthode pour commander d'une manière appropriée en cas de besoin un dispositif de sécurité pour occupants de véhicule

(30) Priorität: 07.06.1997 DE 19724101
(43) Veröffentlichungstag der Anmeldung: 09.12.1998
(73) Patentinhaber: Bayerische Motoren Werke Aktiengesellschaft, 80788 München (DE)
(72) Erfinder: Bachmaier, Peter, 85777 Fahrenzhausen (DE)

(56) Entgegenhaltungen:
- WO-A-94/14638
- US-A- 5 398 185

## Beschreibung

Die Erfindung bezieht sich auf ein Verfahren zur bedarfsgerechten Steuerung von Insassen-Sicherheitseinrichtungen mit den Merkmalen des Oberbegriffs von Patentanspruch 1.

Bei diesen Einrichtungen handelt es sich um Airbags für verschiedene Körperteile, aber auch um Gurtstraffer, Aufschlagpolster usw. Die bedarfsgerechte Steuerung ist die Verbesserung der bisher üblichen starren und nur auf einen durchschnittlichen Fahrzeugbenutzer ausgerichteten Steuerung.

Ein Verfahren der eingangs genannten Art ist aus der US -A-5 398 185 bekannt. Dabei wird die Bewegungsbahn des Fahrzeuginsassens bzw. seiner Körperteile vor und während eines Unfalls beispielsweise mit Hilfe einer On-Board-Kamera bestimmt und es werden die Sicherheitseinrichtungen entsprechend gesteuert. Es erfolgt hier ein punktueller Einsatz der verschiedenen Sicherheitseinrichtungen. Dadurch soll ein wirksamer Schutz des Fahrgastes erzielt werden. Der Ist-Bewegungsablauf wird lediglich insoweit berücksichtigt, als er den Zeitpunkt bestimmt, zu dem die verschiedenen Sicherheitseinrichtungen wirksam gemacht werden.

In diesem Zusammenhang ist es aus der DE 195 20 721 ferner bekannt, eine bedarfsgerechte Reaktion und eine situationsangepaßte Reaktion des den Sicherheitseinrichtungen zugeordneten Steuersystems vorzunehmen, indem alle möglichen Faktoren, wie Unfallschwere, Insassenposition, Insassengröße, Insassenmaße sowie Alter und Geschlecht des Fahrgastes berücksichtigt werden. Die Unfallschwere wird über eine geeignete Precrash-Sensorik bestimmt. Abhängig von den vorliegenden Werten für die verschiedenen Faktoren wird ein vorbereitetes Programm initiiert und die Sicherheitseinrichtung programmgemäß gesteuert. Nicht berücksichtigt wird dabei der tatsächliche Verlauf des Unfalls. Bedingt durch den starren Programmablauf kann damit eine tatsächlich bedarfsgerechte Steuerung der Insassen-Sicherheitseinrichtungen nicht erreicht werden.

Aus der EP 0 636 074 B ist es bekannt, im Crashfall die Auslösung der Sicherheitseinrichtungen rechtzeitig vorzunehmen. Dabei wird die zu erwartende Verlagerung des Fahrzeuginsassen oder seiner zu erwartenden Relativgeschwindigkeit in bezug auf die Fahrgastzelle des Fahrzeugs mit Hilfe des Ausgangssignals eines Beschleunigungssensors abgeschätzt. Dieses Verfahren beginnt erst nach dem Beginn eines Crashvorgangs zu arbeiten. Dabei kann es zu Zeitproblemen kommen, da das Beschleunigungssignal nur anhand des aktuellen Unfalls gewonnen wird und einzig und allein dieses Signal als Basis für die Vorhersage und den programmgesteuerten Ablauf für das Auslösen der Sicherheitseinrichtungen verwendet wird.

Der Erfindung liegt die Aufgabe zugrunde, ein Verfahren zur bedarfsgerechten Steuerung von Insassen-Sicherheitseinrichtungen zu schaffen, mit dem die Wirksamkeit der Sicherheitseinrichtungen optimiert wird.

Die Erfindung löst diese Aufgabe durch die Merkmale des Patentanspruchs 1.

Es wird der Beschleunigungsverlauf während des Unfalls dazu verwendet, den weiteren Ablauf des Unfalls vorherzusagen. Eine Information über das voraussichtliche Unfallgeschehen, die z.B. zu Beginn des Unfalls vorliegt, wird nicht dazu verwendet, ein definiertes Programm für das Auslösen der Sicherheitseinrichtungen starr ablaufen zu lassen. Sie dient allenfalls dazu, eine erste Auswahl über das zunächst maßgebliche Programm zu treffen. Es wird dann während jeder Phase des Unfalls überprüft, ob die zunächst festgelegte bzw. momentan jeweils gültige Unfallverlaufs-"kurve" tatsächlich gültig ist, d.h. den tatsächlichen Verlauf wiedergibt. Ist dies nicht der Fall, erfolgt ein Wechsel zu der "richtigen" Verlaufskurve.

Grundlage für die Auswahl bzw. den Wechsel des für das Auslösen der Sicherheitseinrichtungen maßgeblichen Verlaufskurve ist das Beschleunigungsverhalten (=-muster), aufgrund dessen es möglich wird, auch die Bewegung des Fahrgastes relativ zum Fahrzeuginnenraum vorherzusagen. Durch den Vergleich von Ist- und Soll-Beschleunigungsverlauf wird erkennbar, ob die gewählte Auslösestrategie tatsächlich dem Unfallgeschehen angepaßt ist oder aber ob es erforderlich ist, die zunächst gewählte Auslösestrategie zugunsten einer den Insassen besser schützenden Auslösestrategie aufzugeben.

Das zu erwartende Beschleunigungsverhalten des Fahrzeugs kann wie bei einer an sich bekannten, außerhalb des Fahrzeugs durchgeführten Crash-Simulation durch eine entsprechende On-line-Berechnung gewonnen werden. Der Rechenaufwand läßt sich wesentlich verringern, wenn das zu erwartende Beschleunigungsverhalten des Fahrzeugs aus gespeicherten Beschleunigungsverläufen ausgewählt wird.

Die Auswahl kann, wie auch die Durchführung der Qn-line-Berechnung unter Einbeziehung einer an sich bekannten Pre-Crash-Sensorik erfolgen.

Wie an sich aus der DE 195 20 721 A bekannt, werden im Rahmen der Erfindung auch Informationen über den Fahrgast und das Fahrzeug verwendet. Diese können, wie bei dieser Druckschrift, vor Beginn der Fahrt abgespeichert werden. Es ist aber auch möglich, sie zu einem früheren Zeitpunkt, z.B. während einer früheren Fahrt abzuspeichern und sie dann während der jetzigen Fahrt aus dem Speicher abzurufen. Dies kann durch eine manuelle Eingabe oder eine entsprechende Kennung, beispielsweise mit Hilfe einer Chipcard geschehen.

Es ist aber auch möglich, für diesen Abruf der gespeicherten Daten oder aber sogar für die Gewinnung der aktuellen Daten Verhaltensparameter des Fahrgastes zu verwenden, die mit einer entsprechenden Sensorik automatisch und ohne jedes bewußtes Zutun des Fahrgastes geliefert werden. So kann aus dem Verhalten des Fahrgastes vor und während der Inbetriebnahme bzw. des Fahrbetriebs und seiner Reaktion auf verschiedene Fahrsituationen ein Persönlichkeitsprofil des Fahrgastes gewonnen werden und mit einem abgespeicherten Persönlichkeitsprofil des Fahrgastes selbst oder von Normpersonen in Übereinstimmung gebracht werden. Für dieses Profil liegen die im Rahmen der Erfindung relevanten Parameter vor.

In der Regel wird die Unfallschwere mit Hilfe der Precrash-Sensorik insbesondere hinsichtlich der Geschwindigkeit und des Aufprallorts eines anderen Verkehrsteilnehmers oder eines feststehenden Hindernisses bestimmt. Eine Information über die "Nachgiebigkeit" des Unfallgegners läßt sich daraus jedoch nicht ableiten. Diese Information ergibt sich erst aufgrund des tatsächlichen Unfallgeschehens und wird dazu verwendet, die Auslösestrategie unter Berücksichtigung der damit indirekt bestimmten tatsächlichen Unfallschwere an das jeweilige Unfallgeschehen anzupassen. Damit läßt sich der Soll-Bewegungsablauf präzise bestimmen und die Auslösestrategie während eines Unfalls weiter optimieren.

Anhand der Zeichnung ist die Erfindung weiter erläutert. Es zeigt
- Fig. 1: das erfindungsgemäße Verfahren zur Auswahl eines ersten Beschleunigungsverlaufs des Fahrzeugs
- Fig. 2: das erfindungsgemäße Verfahren zur Anpassung des für die Steuerung der Insassen-Sicherheitseinrichtungen maßgeblichen zu erwartenden Beschleunigungs-Verlaufs an den tatsächlichen Verlauf
- Fig. 3: ein Diagramm zur Erläuterung dieser Anpassungsmaßnahmen und
- Fig. 4: die aus dem Beschleunigungs verlauf sich ergebenden SicherheitsMaßnahmen

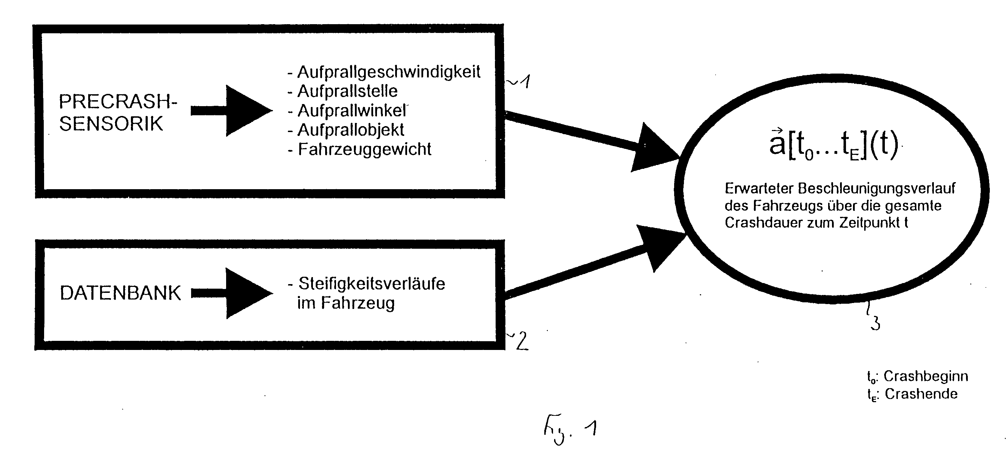

Fig. 1 zeigt das erfindungsgemäße Verfahren zur Gewinnung eines ersten, das voraussichtliche Beschleunigungsverhalten der Fahrzeug-Insassen bestimmenden Beschleunigungsverlaufs des Fahrzeugs. Aus Daten, die von einer nicht dargestellten, z.B. auf optischer oder Radar-Basis arbeitenden Precrash-Sensorik geliefert werden (vgl. EP_A_809121, Stand der Technik nach Art. 54(3) EPÜ) und Daten über das eigene Fahrzeug soll in erster Näherung der zu erwartende Beschleunigungsverlauf des Fahrzeugs während des Unfalls gewonnen werden. Dies geschieht unmittelbar vor Beginn des Unfalls.

Bei den Daten der Precrash-Sensorik handelt es sich um Informationen über den Unfallgegner und seine geometrisch/physikalischen Parameter in bezug auf das eigene Fahrzeug. Diese Parameter sind beispielhaft in dem mit 1 bezeichneten Feld aufgeführt. Die Daten für Aufprallgeschwindigkeit, -stelle und -winkel des Aufprallobjekts werden dabei ebenso berücksichtigt wie die Abmessungen des Aufprallobjekts und dessen Gewicht. Letzteres ergibt sich als Schätzgröße aus den Abmessungen des Objekts.

Damit in Bezug gesetzt werden Daten des eigenen Fahrzeugs, von denen die wichtigsten, nämlich die Steifigkeitsverläufe in einem mit 2 bezeichneten Feld beispielhaft genannt sind. Aus einer nicht gezeigten Datenbank wird dann der voraussichtliche Beschleunigungsverlauf aus einem Bündel dort hinterlegter Beschleunigungsverläufe ausgewählt. Alternativ kann er auch On-board berechnet werden. Der so erhaltene Beschleunigungsverlauf a entspricht umso besser dem tatsächlichen Verlauf, je detaillierter und vollständiger die für die Auswahl bzw. Berechnung zugrundegelegten Daten sind.

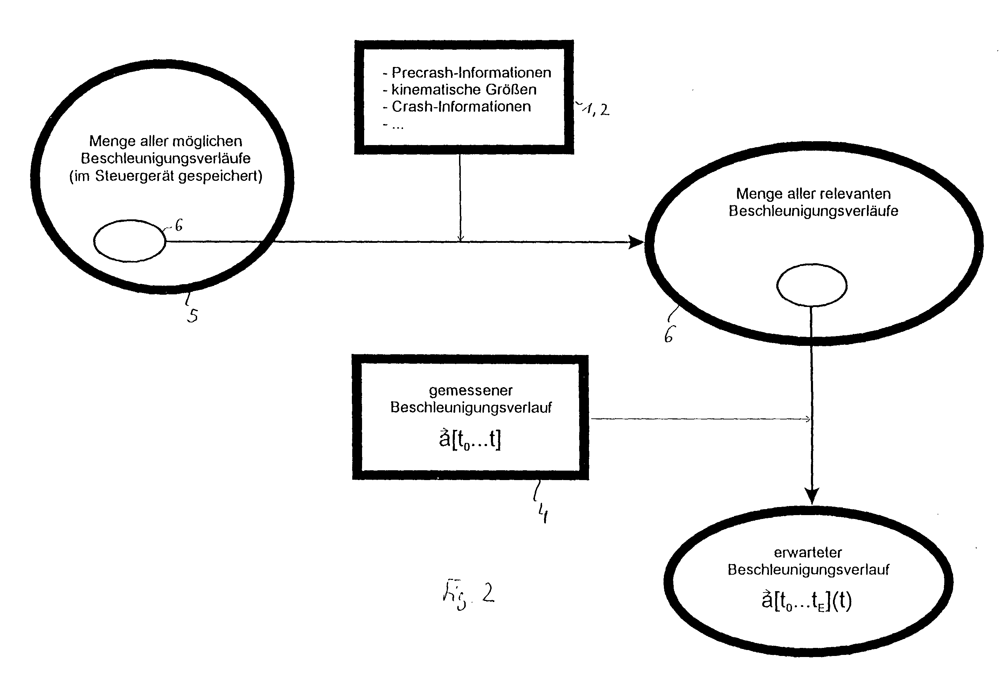

Fig. 2 zeigt den weiteren Ablauf des Verfahrens. Der vorab, d.h. vor Unfallbeginn gewonnene und ausgewählte Beschleunigungsverlauf wird mit dem mittels einer geeigneten Sensorik On-board gemessenen Beschleunigungsverlauf (4) verglichen. Weicht der erwartete Beschleunigungsverlauf vom tatsächlichen ab, wird der zunächst angenommene theoretische Beschleunigungsverlauf (Fig. 1) zugunsten eines anderen, den tatsächlichen Beschleunigungsverlauf besser beschreibenden Beschleunigungsverlauf aufgegeben.

Unter der Annahme, daß hierfür gespeicherte (theoretische) Beschleunigungsverläufe berücksichtigt werden, kann die Auswahl in Umfang und damit Rechenzeit verringert werden, wenn bereits vor Unfallbeginn aufgrund der zur Verfügung stehenden Daten eine Vorauswahl getroffen wird. Aus der Menge aller gespeicherten möglichen Beschleunigungsverläufe (5) wird die Menge aller relevanten Beschleunigungsverläufe (6) ausgewählt. Als Auswahlkriterien können wie bei der Erstauswahl (Fig.1) die Precrash-Daten und kinematischen Größen (1 und 2, Fig.1) sowie zusätzliche Informationen verwendet werden, die während des Unfalls erfaßt werden. Aus der Menge 6 wird ein möglichst optimal der Wirklichkeit entsprechender Verlauf ausgewählt bzw. die vorgenommene Auswahl ständig optimiert. Der erwartete Verlauf läßt dann eine genaue Vorhersage des tatsächlichen Beschleunigungsverlaufs zu.

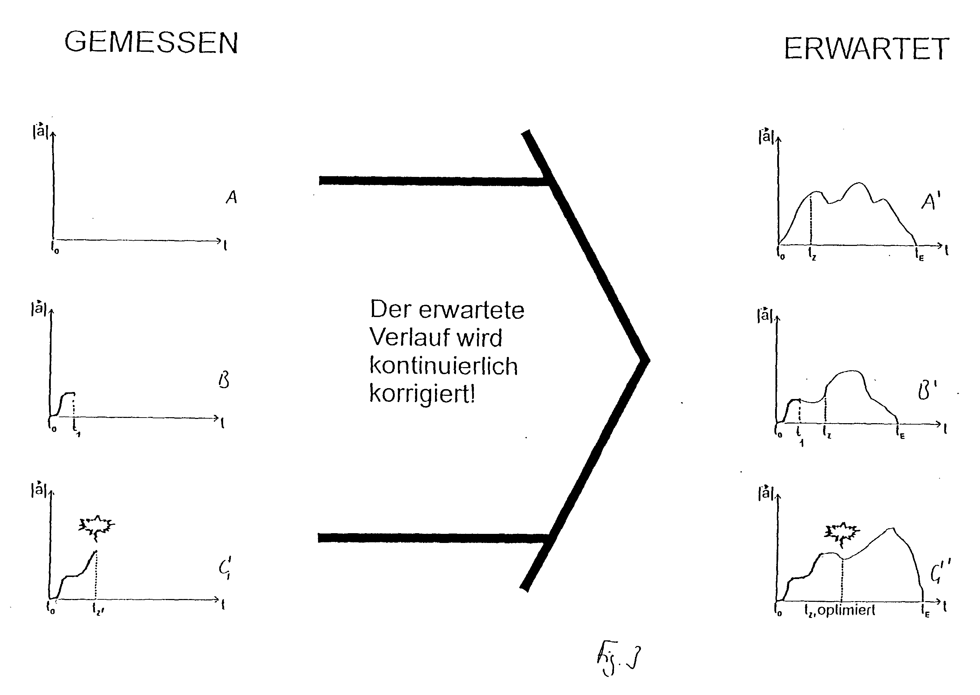

Die Arbeitsweise des erfindungsgemäßen Verfahrens ist anhand von Fig. 3 und einem einfachen Beispiel erläutert. Der tatsächliche (=gemessene) und der oben beschriebene erwartete Verlauf der Fahrzeugbeschleunigung a während eines Unfalls und der Zeit von t₀ bis t_{E} ist für eine Dimension und zu drei unterschiedlichen Zeitpunkten gezeigt und gegenübergestellt.

Zu Beginn des Unfalls (t₀) ist die gemessene tatsächliche Beschleunigung a gleich 0 (Diagramm A). Aufgrund der aufgenommenen Sensorsignale wird die in A' dargestellte Beschleunigungskurve erwartet. Der Auslösezeitpunkt t_{z} für einen Airbag liegt wie angegeben. Bis zu einem weiteren, beispielhaft angenommenen Zeitpunkt t₁ verläuft die Beschleunigung wie in B angegeben. Aufgrund dieses Verlaufs wird der erwartete Beschleunigungsverlauf korrigiert und in Übereinstimmung mit dem tatsächlichen Verlauf gebracht. Der nunmehr erwartete weitere Verlauf ist in B' dargestellt. Der Auslösezeitpunkt t_{z} liegt nunmehr später.

Der tatsächliche weitere Verlauf gestaltet sich tatsächlich wiederum anders als erwartet. Bis zu einem Zeitpunkt T_{z'} verläuft die Beschleunigung wie in C gezeigt. t_{z'} ist der Zeitpunkt, zu dem ein bei konventionellen Steuerungen maßgeblicher Beschleunigungswert errreicht wird. Daraus ergibt sich ein erneut korrigierter weiterer Verlauf, wie in C' gezeigt. Daraus leitet sich ein Auslösezeitpunkt t_{z} für Insassen-Sicherheitseinrichtungen ab, der nochmals später liegt.

Das gezeigte Beispiel besitzt hinsichtlich der Verschiebung des Auslösezeitpunkts t_{z} keine allgemeine Gültigkeit. Es ist sogar möglich, die Sicherheitseinrichtungen noch vor Erreichen eines definierten Beschleunigungswerts auszulösen.

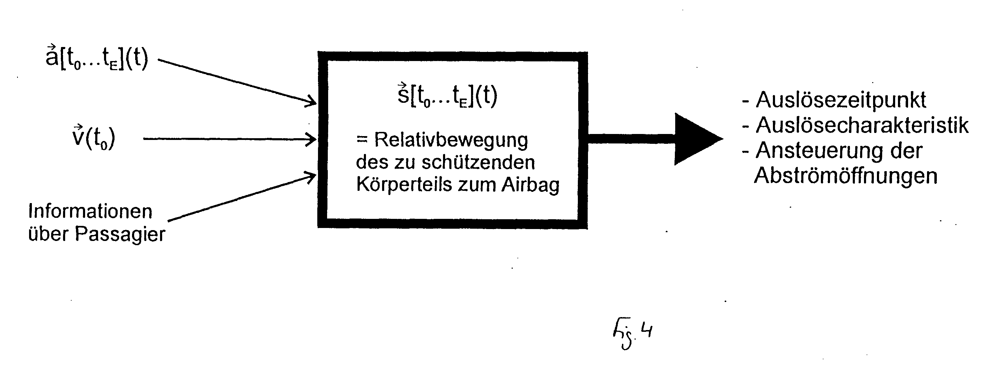

Aus dem erwarteten, optimal an den tatsächlichen Verlauf angepaßten, i.d.R. mehrdimensionalen Beschleunigungsverlauf des Fahrzeugs ergeben sich für die einzelnen Sicherheitseinrichtungen individuelle Strategien=Steuerungen während des Unfalls. Diese beziehen sich z.B. auf den Auslösezeitpunkt, die Auslösecharakteristik, das Zeitverhalten usw. (Fig. 4). Letzteres bedeutet im Falle eines Airbags beispielsweise die Ansteuerung der Abströmöffnungen.

Für diese Strategie maßgeblich sind zusätzlich zu dem erwarteten Beschleunigungsverlauf auch der Bewegungszustand v des Fahrzeugs hinsichtlich Geschwindigkeit, Richtung, Gierrate, Gewicht, Lastverteilung, usw. Eine geeignete Sensorik ist in der Regel im Fahrzeug ohnehin vorhanden und dient dazu, Systeme und Komponenten des Fahrzeugs für den normalen Fahrbetrieb zu steuern. Femer werden Informationen über den jeweiligen Fahrgast berücksichtigt. Diese Informationen wie Größe, Gewicht, Sitzhaltung, Sitzposition, Alter, Geschlecht werden mit einer Sensorik On-board bestimmt oder aus einem Speicher entnommen, in dem diese Daten abgelegt sind.

Aus diesen Daten wird die Relativbewegung s der zu schützenden Körperteile der Fahrgäste berechnet und die Strategie für die Steuerung der Insassen-Sicherheitseinrichtungen so gewählt, daß diese eine optimale Schutzfunktion entfalten.

## Patentansprüche

1. Verfahren zur bedarfsgerechten Steuerung von Insassen-Sicherheitseinrichtungen unter Berücksichtigung der zu erwartenden Bewegung des Fahrgastes relativ zum Fahrzeug, bei dem die zu erwartende Bewegung des Fahrgastes aufgrund des zu erwartenden Beschleunigungsverhaltens des Fahrzeugs während des Unfalls und aufgrund der aktuellen fahrgastindividuellen Parameter bestimmt wird, **dadurch gekennzeichnet, daß** das zu erwartende Beschleunigungsverhalten des Fahrzeugs auf der Basis des bis zum jeweiligen Zeitpunkt des Unfalls erfolgten Beschleunigungsverlaufs korrigiert wird.

2. Verfahren nach Anspruch 1, **dadurch gekennzeichnet, daß** der zu erwartende Beschleunigungsverlauf des Fahrzeugs aus gespeicherten Beschleunigungsverläufen unmittelbar vor Beginn des Unfalls ausgewählt wird.

3. Verfahren nach Anspruch 2, **dadurch gekennzeichnet, daß** die Auswahl des Beschleunigungsverlaufs mit Hilfe einer Precrash-Sensorik erfolgt.

4. Verfahren nach Anspruch 2 oder 3, **dadurch gekennzeichnet, daß** die Korrektur des ursprünglich ausgewählten Beschleunigungsverlauf mit Hilfe von Daten erfolgt, die von einer internen Beschleunigungssensorik geliefert werden.

5. Verfahren nach einem der Ansprüche 1 bis 4, **dadurch gekennzeichnet, daß** die Auswahl und/oder die Korrektur des Beschleunigungsverlaufs mit Hilfe von Daten über den Unfallgegner erfolgt.

## Claims

1. A method of control as required of devices for protecting the occupants of a vehicle, allowing for the expected motion of the occupant relative to the vehicle, wherein the expected motion of the occupant is calculated on the basis of the expected acceleration of the vehicle during the accident and the actual individual parameters of the occupant, **characterised in that** the expected acceleration of the vehicle is corrected on the basis of the variation in acceleration up to the time of the accident.

2. A method according to claim 1, **characterised in that** the expected variation in the acceleration of the vehicle is selected from acceleration curves stored immediately before the beginning of the accident.

3. A method according to claim 2, **characterised in that** the acceleration curve is selected by using a pre-crash sensory mechanism.

4. A method according to claim 2 or 3, **characterised in that** the originally selected acceleration curve is corrected by means of data delivered by an internal acceleration sensory mechanism.

5. A method according to any of claims 1 to 4, **characterised in that** the acceleration curve is selected and/or corrected by using data about the colliding object.

## Revendications

1. Procédé de commande approprié des installations de sécurité des passagers d'un véhicule en tenant compte du mouvement prévisible des passagers par rapport au véhicule, selon lequel on détermine le mouvement prévisible du passager sur la base du comportement prévisible de l'accélération du véhicule pendant l'accident, et à partir des paramètres actuels propres aux passagers,
**caractérisé en ce qu'**
on corrige le comportement d'accélération prévisible du véhicule sur la base de la courbe d'accélération obtenue jusqu'à l'instant respectif de l'accident.

2. Procédé selon la revendication 1,
**caractérisé en ce qu'**
on sélectionne directement, avant le début de l'accident, la courbe d'accélération prévisible du véhicule parmi des courbes d'accélération mises en mémoire.

3. Procédé selon la revendication 2,
**caractérisé en ce qu'**
on sélectionne la courbe d'accélération à l'aide de capteurs de pré-collision.

4. Procédé selon l'une des revendications 2 ou 3,
**caractérisé en ce qu'**
on corrige la courbe d'accélération sélectionnée à l'origine, à l'aide de données fournies par des capteurs d'accélération internes.

5. Procédé selon l'une quelconque des revendications 1 à 4,
**caractérisé en ce qu'**
on sélectionne et/ou on corrige la courbe d'accélération à l'aide de données concernant l'autre partie à l'accident.
